# FASCICULE DE BREVET EUROPEEN

(11) **EP 4 176 582 B1**
(45) Date de publication et mention de la délivrance du brevet: **19.06.2024**
(21) Numéro de dépôt: 21739067.3
(22) Date de dépôt: 30.06.2021
(51) Int. Cl.: H04N 25/67, H04N 25/671, H04N 25/674, G06T 5/50, G01S 3/786

(54) **PROCÉDÉ D'ACQUISITION D'IMAGES D'UNE SCÈNE**
VERFAHREN ZUR ERFASSUNG VON BILDERN EINER SZENE
METHOD FOR ACQUIRING IMAGES OF A SCENE

(30) Priorité: 02.07.2020 FR 2006979
(43) Date de publication de la demande: 10.05.2023
(73) Titulaire: THALES, 92400 Courbevoie (FR)
(72) Inventeur: PERRUCHOT, Ludovic, 78995 Elancourt (FR); FAYE, Régis, 78995 Elancourt (FR); DEPRUGNEY, Fabien, 78995 Elancourt (FR)
(74) Mandataire: Lavoix
(86) Numéro de dépôt international: PCT/EP2021/068019
(87) Numéro de publication internationale: WO 2022/003033

(56) Documents cités:
- WO-A1-2010/003742
- WO-A2-2006/096211
- WO-A2-2009/048660
- B. SOZZI ET. AL: "Simulator of IRST system with ATR embedded functions", PROCEEDINGS OF SPIE, vol. 7660, 3 mai 2010 (2010-05-03), XP040521710,

## Description

La présente invention concerne un procédé d'acquisition d'images d'une scène. La présente invention concerne aussi un dispositif d'acquisition d'images. La présente invention concerne, en outre, un système optronique, notamment de veille passive, comprenant un tel dispositif d'acquisition d'images.

Les systèmes optroniques de veille infrarouge (en anglais « IRST » pour « Infra-red search and track ») présentent un intérêt opérationnel certain notamment du fait qu'ils n'émettent pas de rayonnement, ce qui les rend indétectables. De tels systèmes sont, ainsi, utilisés dans des aéronefs, des navires ou des véhicules terrestres pour détecter des menaces potentielles. Un système optronique est divulgué par exemple dans le document WO2010003742 A1.

Les détecteurs infrarouges de tels systèmes sont soumis à un bruit dit de non-uniformité (en anglais « NU » pour « non-uniformity » ou « fixed pattern noise »). Un tel bruit est un bruit spatial dû à la non-uniformité de réponse entre les différents pixels du détecteur. Il peut être à l'origine de motifs parasites dans l'image générée, tel qu'un lignage vertical ou horizontal. Un tel bruit est, ainsi, susceptible de dégrader fortement l'image, ce qui la rend inutilisable pour certaines applications.

Des techniques sont connues pour réduire le bruit de non-uniformité, le bruit résiduel étant appelé résiduel de correction de non uniformité. Le document WO2006096211 A2 divulgue par exemple un procédé de compensation du bruit de non-uniformité pour un système d'acquisition d'images à radar thermiques avec balayage frontal.

Avec de telles techniques (abrégées en « NUC » de l'anglais « non-uniformity correction »), le résiduel de correction est de l'ordre de ½ NETD (abrégé de l'anglais « Noise Equivalent Température Différence » traduit en français par « Différence de Température Equivalente à la valeur efficace du Bruit »).

Néanmoins, pour les systèmes optroniques IRST de nouvelle génération, présentant des détecteurs ayant une forte sensibilité donc un NETD très faible, les techniques classiques ne permettent pas d'atteindre le ½ NETD de résiduel de NUC.

Ce résiduel de correction est donc un facteur limitant les performances du système.

Il existe donc un besoin pour un procédé permettant de diminuer le résiduel de correction du bruit de non-uniformité.

A cet effet, la présente description a pour objet un procédé d'acquisition selon la revendication 1.

Selon d'autres aspects avantageux, le procédé d'acquisition comprend une ou plusieurs des caractéristiques des revendications 2 à 8.

La présente description concerne aussi un dispositif d'acquisition selon la revendication 9.

La présente description concerne aussi un système optronique selon la revendication 10.

D'autres caractéristiques et avantages de l'invention apparaîtront à la lecture de la description qui suit de modes de réalisation de l'invention, donnée à titre d'exemple uniquement, et en référence aux dessins qui sont :
[Fig 1] la figure 1 est une vue schématique d'un dispositif d'acquisition d'images comprenant un détecteur matriciel, des moyens de balayage et des moyens de contre-balayage,
[Fig 2] la figure 2 comprend deux graphiques : un premier illustrant les angles pris par les moyens de balayage et un deuxième illustrant les angles pris par les moyens de contre-balayage au cours du temps,
[Fig 3] la figure 3 est un détail du graphique de la figure 2 illustrant les angles pris par les moyens de contre-balayage au cours du temps,
[Fig 4] la figure 4 est une représentation schématique du détecteur matriciel de la figure 1 sur lequel trois images sont formées successivement en fonction de la différence de vitesse angulaire entre les moyens de balayage et de contre-balayage, le cas où la différence de vitesse angulaire est nulle est illustré sur les trois images du haut, le cas où la différence de vitesse angulaire est non nulle est illustré sur les trois images du bas, et
[Fig 5] la figure 5 comprend trois représentations schématiques a), b), c) du détecteur matriciel de la figure 1 sur lequel sont formées des images ayant des orientations différentes.

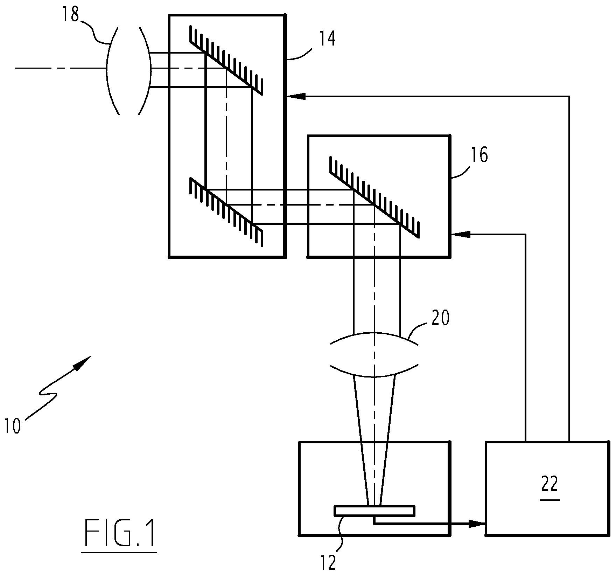

Un dispositif 10 d'acquisition d'images est illustré par la figure 1. Le dispositif 10 est destiné à être intégré dans des systèmes optroniques, notamment de veille passive (IRST). De tels systèmes optroniques équipent, par exemple, des véhicules tels que des navires, des aéronefs ou des véhicules terrestres.

Le dispositif 10 est configuré pour acquérir des images d'une scène, c'est-à-dire d'un environnement dans le champ de vision du dispositif 10. La scène est, par exemple, un théâtre d'opérations, éventuellement militaires, présentant des menaces potentielles.

Dans l'exemple illustré par la figure 1, le dispositif 10 comprend un détecteur matriciel 12, des moyens de balayage 14, des moyens de contre-balayage 16, une optique frontale 18, des moyens de formation d'image 20 et un contrôleur 22.

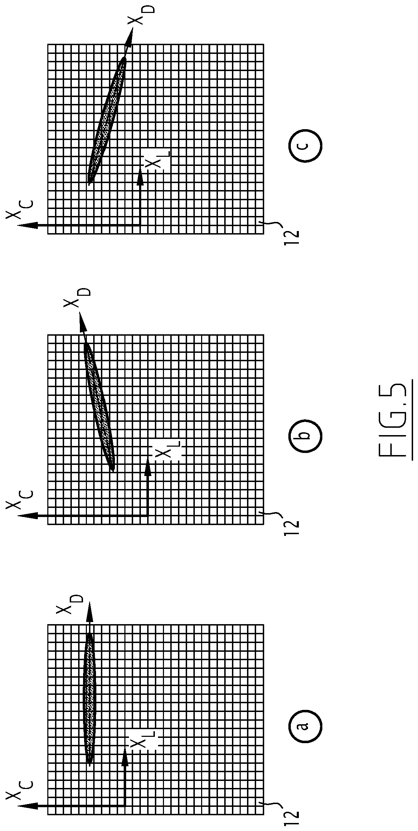

Le détecteur matriciel 12 est un détecteur à deux dimensions comprenant une pluralité de pixels disposés en lignes et en colonnes. Les lignes définissent des axes de lignes X_{L} et les colonnes des axes de colonnes X_{C} (voir figure 5 notamment).

Le détecteur matriciel 12 est configuré pour recevoir un flux lumineux sur au moins un pixel du détecteur 12 et pour générer, pour chaque pixel, une image représentative du flux lumineux reçu par ledit pixel. Cette image est la réponse du pixel au flux reçu. L'ensemble des images générées par les pixels du détecteur pour un même flux lumineux forme une image de la scène.

Dans le cas d'un dispositif 10 de veille infrarouge, le détecteur matriciel 12 est, par exemple, un détecteur sensible dans la bande comprise entre 3 micromètres (µm) et 5 µm ou dans la bande comprise entre 8 µm et 12 µm. Par exemple, le détecteur 12 est réalisé dans un matériau composé de Mercure, Cadmium et Tellure (HgCdTe) (avec des compositions adaptées pour chacune des bandes). En variante, d'autres matériaux sont utilisés comme les matériaux multi-puits quantiques dans les composés Arsénure de Gallium/Arsénure de Gallium et d'Aluminium (GaAs/AIGaAs) ou Antimoniure d'Indium (InSb).

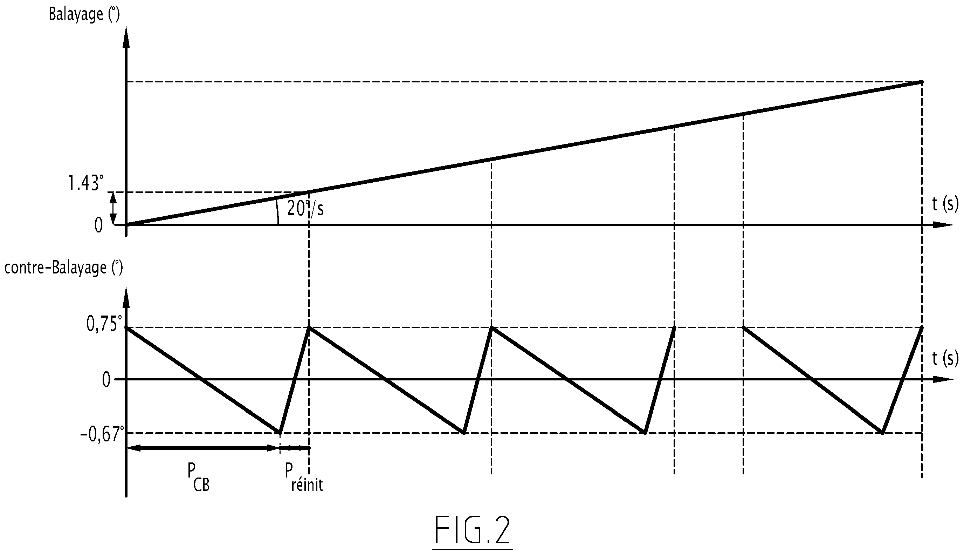

Les moyens de balayage 14 sont propres à balayer la scène à imager avec une vitesse angulaire de balayage V_{B} et selon des figures de balayage. Le graphique du haut de la figure 2 illustre le déplacement angulaire des moyens de balayage 14 au cours du temps. La vitesse angulaire de balayage V_{B} est, de préférence, constante. Dans cet exemple, la vitesse angulaire de balayage V_{B} est égale à 20 degrés par seconde (°/s).

Les moyens de balayage 14 comprennent, par exemple, des optiques, telles que des miroirs.

Avantageusement, les moyens de balayage 14 comprennent aussi un dérotateur optique propre à compenser la rotation de l'image lors du balayage.

Par exemple, les moyens de balayage 14 sont commandés par le contrôleur 22. En variante, les moyens de balayage 14 comprennent une unité de contrôle qui leur est propre.

Les moyens de contre-balayage 16 sont propres à contre-balayer la scène selon une vitesse angulaire de contre-balayage V_{CB}. Les moyens de contre-balayage 16 permettent notamment de compenser le défilement de la scène créé par les moyens de balayage 14 à chaque acquisition d'image par le détecteur 12.

Les moyens de contre-balayage 16 ont un champ total de contre-balayage définissant une position initiale de contre-balayage et une position finale de contre-balayage. Les moyens de contre-balayage 16 sont configurés pour revenir en position initiale dès l'atteinte de la position finale pendant une période de réinitialisation P_{réinit}.

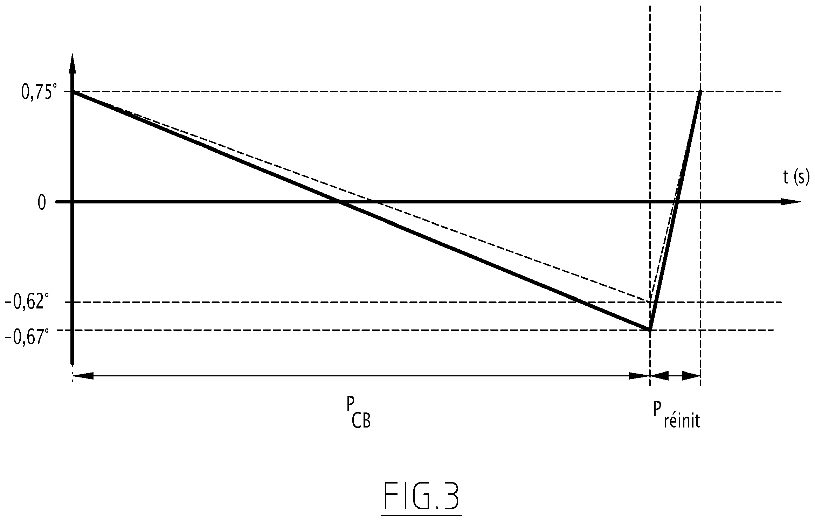

La période de réinitialisation P_{réinit} est très inférieure à la période de contre-balayage P_{cb} (période entre la position initiale et la position finale). Avantageusement, la période de contre-balayage P_{cb} est plus de dix fois supérieure à la période de réinitialisation P_{réinit}. Dans l'exemple illustré par les figures 2 et 3, la période de contre-balayage P_{cb} est égale à 68 millisecondes et la période de réinitialisation P_{réinit} est égale à 3,5 ms.

La vitesse angulaire de contre-balayage V_{CB} est choisie différente de la vitesse angulaire de balayage V_{B} d'une différence de vitesse angulaire Δ. Dans ce qui suit, la différence de vitesse angulaire Δ est la différence pendant les phases de contre-balayage.

En particulier, lors des périodes de contre-balayage P_{CB}, la différence de vitesse angulaire Δ est choisie de sorte que :
- les images IM successives acquises par le détecteur 12 pendant chaque période de contre-balayage P_{CB} se forment sur des ensembles de pixels distincts, chaque ensemble de pixels étant décalé de l'ensemble de pixels ayant permis d'acquérir l'image précédente d'un même nombre de pixels fonction de la différence de vitesse angulaire Δ, et
- les images IM successives acquises par le détecteur 12 pendant chaque période de contre-balayage P_{CB} correspondent à des portions de la scène qui se recouvrent partiellement (au moins une portion de la scène commune est imagée sur ces images IM).

Avantageusement, la différence de vitesse angulaire Δ est prédéterminée de sorte que le nombre de pixels correspondant au décalage soit supérieur ou égal à un pendant l'acquisition d'une image IM. Cela permet, ainsi, de former une image d'une même portion de la scène sur des pixels distincts, ce qui permet après traitement de réduire le bruit spatial induit par la fonction de transfert propre à chaque pixel. De préférence, la différence de vitesse angulaire Δ est, en outre, prédéterminée de sorte que le nombre de pixels correspondant au décalage soit inférieur ou égal à 4. Cela permet d'obtenir une image relativement stable lors des acquisitions (flou limité) tout en induisant un glissement contrôlé d'un nombre de pixels pour les images IM consécutives de la même portion de la scène.

Avantageusement, la différence de vitesse angulaire Δ est prédéterminée de sorte que le nombre de pixels différents imageant une même portion de scène pendant une phase de contre-balayage P_{CB} est supérieur ou égal à cinq, de préférence supérieur ou égal à dix. Ceci correspond typiquement à un décalage de l'ordre d'un pixel par image IM captée, pendant la phase de contre-balayage P_{CB}. Cela permet, après traitement, de réduire le bruit spatial sur l'image de la portion de scène d'un facteur racine du nombre de pixels différents imageant la portion de scène.

Notamment, dans l'exemple illustré par la figure 3, la courbe en pointillés illustre le déplacement angulaire des moyens de contre-balayage 16 si la différence de vitesse angulaire Δ était nulle et la courbe en traits pleins, le déplacement angulaire des moyens de contre-balayage 16 pour une différence de vitesse angulaire Δ non nulle (ici de 0,05° pendant la durée de la phase de contre-balayage P_{CB}).

Le décalage du nombre de pixels est réalisé selon un axe de décalage. Avantageusement, l'axe de décalage X_{D} forme un angle différent de 0° et de 180° avec les axes de lignes X_{L} et les axes de colonnes X_{C} des pixels du détecteur 12.

Par exemple, la figure 5 illustre trois orientations distinctes de l'axe de décalage X_{D} pour trois images IM distinctes formées sur un ensemble de pixels du détecteur 12. Le cas a) correspond à un axe de décalage X_{D} parallèle à l'axe des lignes X_{L}. Les cas b) et c) correspondent à un axe de décalage X_{D} formant un angle différent de 0° et de 180° avec les axes de lignes X_{L} et les axes de colonnes X_{C} des pixels du détecteur 12.

Par exemple, l'orientation de l'axe de décalage X_{D} est fixée par une unité de micro-balayage transverse appartenant aux moyens de balayage 14 ou de contre-balayage 16. Les orientations « en diagonale » permettent de s'affranchir du phénomène de lignage ou de colonage.

Par exemple, les moyens de contre-balayage 16 sont commandés par le contrôleur 22. En variante, les moyens de contre-balayage 16 comprennent une unité de contrôle qui leur est propre ou qui est commune aux moyens de balayage 14.

L'optique frontale 18 est propre à recevoir un flux lumineux en provenance de la scène, ce flux étant à l'origine de l'image acquise sur le détecteur 12.

L'optique frontale 18 comprend, par exemple, une lentille convergente.

Dans un autre exemple, l'optique frontale 18 et les moyens de balayage 14 sont formés d'un système catadioptrique.

Les moyens de formation d'image 20 permettent d'envoyer le flux reçu par l'optique frontale 18 sur le détecteur 12. Les moyens de formation d'image 20 comprennent notamment une optique de focalisation permettant de focaliser le flux reçu par l'optique frontale 18 sur le détecteur 12.

Avantageusement, les moyens de formation d'image 20 comprennent aussi une optique complémentaire de focalisation, appelée « CAF » (pour contrôle automatique de focalisation).

Le contrôleur 22 est, par exemple, de type hardware (traduit en français par *matériel*), tel qu'un circuit logique programmable (abrégé par FPGA ce qui signifie en anglais *Field Programmable Gate Array),* ou encore un circuit intégré dédié, tel qu'un ASIC (de l'anglais *Application-Specific Integrated Circuit).*

En variante, le contrôleur 22 est, par exemple, un ordinateur. Le contrôleur 22 comprend, par exemple, une unité de traitement de données, des mémoires, un lecteur de support d'informations et une interface homme/machine, telle qu'un clavier ou un afficheur.

Le contrôleur 22 est, par exemple, en interaction avec un produit-programme d'ordinateur qui comporte un support d'informations.

Le support d'informations est un support lisible par le calculateur 16, usuellement par l'unité de traitement de données du calculateur 16. Le support lisible d'informations est un médium adapté à mémoriser des instructions électroniques et capable d'être couplé à un bus d'un système informatique. A titre d'exemple, le support lisible d'informations est une clé USB, une disquette ou disque souple (de la dénomination anglaise *floppy disk*)*,* un disque optique, un CD-ROM, un disque magnéto-optique, une mémoire ROM, une mémoire RAM, une mémoire EPROM, une mémoire EEPROM, une carte magnétique ou une carte optique. Sur le support d'informations est mémorisé le produit-programme d'ordinateur comprenant des instructions de programme.

Le programme d'ordinateur est chargeable sur l'unité de traitement du contrôleur 22 et est adapté pour entraîner la mise en oeuvre d'étapes d'un procédé d'acquisition d'images IM comme cela sera décrit dans la suite de la description.

En complément facultatif, le dispositif d'acquisition 10 comprend deux modes de réglage distincts : un premier mode de réglage configuré pour acquérir une image nette de la scène et un deuxième mode de réglage configuré pour acquérir une image floue de la scène. Le premier mode de réglage est appliqué au dispositif d'acquisition 10 pendant les périodes de contre-balayage P_{CB}. Le deuxième mode de réglage est appliqué au dispositif d'acquisition 10 pendant les périodes de réinitialisation P_{réinit}.

Dans cet exemple, dans le premier mode de réglage, les moyens de formation d'image 20 sont configurés pour focaliser les images IM de la scène sur le détecteur 12. Le dérotateur optique des moyens de balayage 14 est, le cas échéant, réglé pour compenser les mouvements de rotation de l'image induit par les moyens de balayage 14.

Dans le deuxième mode de réglage, les moyens de formation d'image 20 sont configurés pour défocaliser les images IM de la scène sur le détecteur 12. En option facultative, dans ce deuxième mode de réglage, le dérotateur optique est, le cas échéant, réglé pour ne pas compenser les mouvements de rotation de l'image induit par les moyens de balayage 14. En option facultative, dans le deuxième mode de réglage, l'unité de micro-balayage transverse est, le cas échéant, utilisée pour modifier l'axe de décalage X_{D} au cours de la période de réinitialisation P_{réinit}.

Un procédé d'acquisition d'images utilisant le dispositif 10 d'acquisition d'images décrit précédemment va maintenant être décrit en référence aux figures 2 à 5.

Au cours du procédé d'acquisition d'images, les moyens de balayage 14 et de contre-balayage sont activés pour respectivement balayer et contre-balayer la scène à imager.

Le procédé d'acquisition comprend une étape 100 d'acquisition d'images IM successives de portions consécutives de la scène sur des ensembles de pixels distincts du détecteur 12. Les images sont acquises à une cadence faible de manière à obtenir une série d'images fixes comme avec un appareil photo ou à une cadence plus importante de manière à acquérir assez d'images pour former un flux vidéo.

Du fait de la différence de vitesse angulaire Δ entre les moyens de balayage 14 et de contre-balayage 16, les images IM successives acquises correspondent à des portions de la scène qui se recouvrent partiellement (au moins une portion de scène commune entre deux images IM consécutives).

En outre, du fait de cette même différence de vitesse angulaire Δ, chaque ensemble de pixels est décalé de l'ensemble de pixels ayant permis d'acquérir l'image précédente d'un même nombre de pixels. Ainsi, des mêmes portions de scène sont imagées sur des pixels distincts.

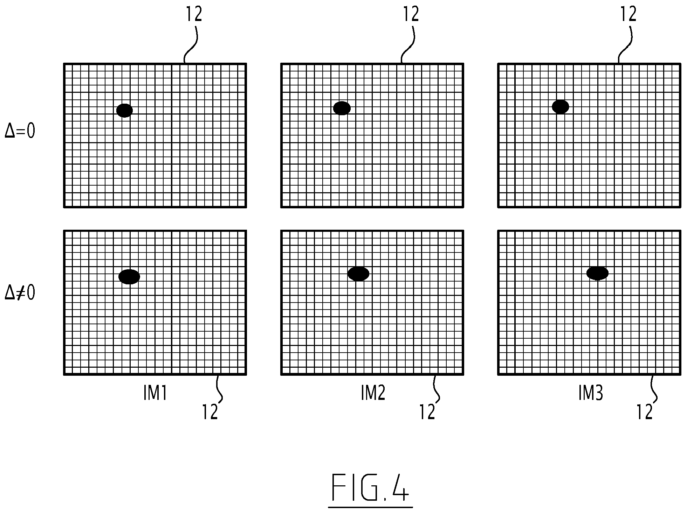

Ainsi, comme illustré sur la figure 4, dans le cas de trois images successives IM1, IM2, IM3, lorsque la différence de vitesse angulaire Δ est non nulle, chaque image se formant sur le détecteur 12 est décalé d'un même nombre de pixels par rapport à l'image précédente. Dans cet exemple, le décalage est d'un pixel. Sans différence de vitesse angulaire Δ, les trois images seraient formées sur un même pixel.

Le procédé d'acquisition comprend une étape 110 de génération d'une image finale IMF de la scène en fonction des images IM acquises pour la scène. L'image finale IMF est avantageusement obtenue lors d'un post-traitement, par le contrôleur 22, des images IM acquises. L'image finale IMF est une image de la scène avec un grand angle de vue, notamment très supérieur au champ utile instantané de l'optique frontale 18.

Dans un exemple de mise en oeuvre, l'étape de génération 110 comprend le recalage des images IM acquises successivement de sorte à faire correspondre les portions communes de la scène sur lesdites images IM. Par exemple, le recalage vise à identifier les images IM des pixels imageant la même portion de scène.

Dans cet exemple, pour chaque même portion de la scène imagée successivement sur des ensembles de pixels distincts, il est déterminé une image intermédiaire IMInt de ladite portion de scène en fonction des images recalées de ladite portion de scène.

La détermination de chaque image intermédiaire IMInt comprend, par exemple, le calcul d'une moyenne des images recalées de la portion de la scène correspondant à ladite image intermédiaire IMInt.

Par exemple, une image intermédiaire IMlnt correspond à une portion d'image de la scène occupant seulement un pixel par image.

L'image finale IMF est obtenue en fonction des images intermédiaires déterminées. En effet, chaque image intermédiaire IMInt imageant une portion distincte de la scène consécutive des portions de la scène imagée par les autres images intermédiaires IMlnt, la mise bout à bout des images intermédiaires permet d'obtenir l'image finale IMF.

Optionnellement, le procédé d'acquisition comprend l'analyse 120 des images IM acquises pendant les périodes de réinitialisation P_{réinit} des moyens de contre-balayage 16 pour déterminer un éventuel défaut du détecteur 12 dans la direction de balayage. En effet, le retour du contre-balayage génère un fort défilement, donc un flou image important suivant un axe. Les images IM obtenues pendant la période de réinitialisation P_{réinit} sont alors des images homogénéisées par le flou de bougé (éventuellement encore plus floues dans le cas où le dispositif 10 est dans son deuxième mode de réglage). En post-intégrant ces images pour diminuer le bruit (typiquement 100 pour gagner un facteur 10 sur le rapport signal sur bruit image), on obtient une image des défauts résiduels suivant l'axe balayé.

Dans ce cas, l'image finale IMF est éventuellement corrigée des défauts déterminés.

L'étape d'analyse est, par exemple, mise en oeuvre par le contrôleur 22.

Optionnellement, le procédé d'acquisition comprend l'application 130 de traitement de détection et/ou de classification d'éléments sur l'image finale IMF. De tels traitements sont, par exemple, adaptés pour détecter des menaces potentielles.

L'homme du métier comprendra qu'une fois que les moyens de balayage 14 ont balayé l'intégralité de la scène dans le champ de balayage, les étapes du procédé sont réitérées pour générer de nouvelles images finales IMF.

Ainsi, le présent procédé et dispositif d'acquisition permettent par un glissement contrôlé des images acquises au cours du temps d'imager des mêmes portions de la scène sur des pixels distincts, ce qui permet, après traitement des images acquises, de diminuer le bruit de non-uniformité dû à la fonction de transfert de chaque pixel ou des lignes de pixels ou des colonnes de pixels.

Le présent procédé reprend, ainsi, le principe des capteurs de type TDI (en anglais « Time Delay intégration » traduit en français par « décalage temporel et intégration »). En effet, dans le cas des capteurs TDI, le capteur est intégré dans un porteur qui se déplace à une vitesse constante dans une direction. L'image de la scène observée défile alors sur le capteur dans la même direction avec une orientation opposée. Ainsi, la ligne de pixels de rang i+1 voit, à un instant t(i+1), la même distribution d'intensité lumineuse vue par la ligne d'ordre i à un instant précédent t(i)=t(i+1)-δt, correspondant à une même ligne d'une image optique de la scène observée. Le capteur TDI comprend un circuit électronique de post-traitement qui intègre les signaux générés par les différentes lignes de pixels de la matrice et correspondant à une même ligne de l'image. En d'autres termes il additionne, colonne par colonne, les signaux générés par les pixels de la ligne de rang 1 à l'instant t1, ceux de la ligne de rang 2 à l'instant t2, ... et ceux de la ligne de rang N à l'instant tN. A sa sortie, le circuit fournit un vecteur de données d'image représentatif de ladite ligne de l'image optique, intégrée sur un temps égal à N·δt, ce qui permet d'augmenter le rapport signal sur bruit des données d'image acquises par le capteur.

Le présent procédé permet en introduisant une différence angulaire entre la vitesse angulaire de balayage V_{B} et la vitesse angulaire de contre-balayage V_{CB} d'échanger du flou image contre une post-intégration sur N pixels différents du détecteur 12. Cela permet de réduire le résiduel de bruit de non uniformité (NUC) d'un facteur racine de N. En outre, cela permet aussi de diminuer l'impact des pixels morts.

Ainsi, les présents dispositif et procédé permettent d'améliorer le résiduel de correction du bruit de non-uniformité, ce qui améliore la sensibilité des systèmes IRST de nouvelles génération ayant une sensibilité augmentée.

L'homme du métier comprendra que l'invention ne se limite pas aux exemples décrits dans la description et que l'étendue de l'invention n'est limitée que par les revendications suivantes.

## Revendications

1. Procédé d'acquisition d'images d'une scène par un dispositif (10) d'acquisition d'images, le dispositif d'acquisition (10) comprenant un détecteur matriciel (12) ayant une pluralité de pixels, des moyens de balayage (14) de la scène selon une vitesse angulaire de balayage (V_{B}) et des moyens de contre-balayage (16) de la scène selon une vitesse angulaire de contre-balayage (V_{CB}), la vitesse angulaire de contre-balayage (V_{CB}) étant différente de la vitesse angulaire de balayage (V_{B}) d'une différence de vitesse angulaire (Δ), le procédé comprenant les étapes de :
a. acquisition d'images (IM) successives de portions consécutives de la scène se recouvrant partiellement sur des ensembles de pixels distincts du détecteur (12), chaque ensemble de pixels étant décalé de l'ensemble de pixels ayant permis d'acquérir l'image précédente d'un même nombre de pixels fonction de la différence de vitesse angulaire (Δ), et
b. génération d'une image finale (IMF) de la scène en fonction des images (IM) acquises.

2. Procédé selon la revendication 1, dans lequel l'étape de génération comprend :
a. le recalage des images (IM) successives de la scène de sorte à faire correspondre les portions communes de la scène sur lesdites images (IM),
b. pour chaque même portion de la scène imagée successivement sur des ensembles de pixels distincts, la détermination d'une image intermédiaire (IMlnt) de ladite portion de scène en fonction des images recalées de ladite portion de scène, et
c. la détermination de l'image finale (IMF) de la scène en fonction des images intermédiaires (IMlnt) déterminées.

3. Procédé selon la revendication 2, dans lequel la détermination de chaque image intermédiaire (IMlnt) comprend le calcul d'une moyenne des images recalées de ladite portion de scène.

4. Procédé selon l'une quelconque des revendications 1 à 3, dans lequel la différence de vitesse angulaire (Δ) est prédéterminée de sorte que le nombre de pixels correspondant au décalage entre deux images (IM) consécutives soit supérieur ou égal à un.

5. Procédé selon l'une quelconque des revendications 1 à 4, dans lequel les pixels du détecteur (12) sont agencés en lignes et en colonnes, les lignes définissant des axes de lignes (X_{L}) et les colonnes des axes de colonnes (X_{C}), lors de l'étape d'acquisition, le décalage du nombre de pixels étant réalisé selon un axe de décalage (X_{D}), l'axe de décalage (X_{D}) formant un angle différent de 0° et de 180° avec les axes de lignes (X_{L}) et les axes de colonnes (X_{C}).

6. Procédé selon l'une quelconque des revendications 1 à 5, dans lequel les moyens de contre-balayage (16) ont un champ total de contre-balayage définissant une position initiale de contre-balayage et une position finale de contre-balayage, les moyens de contre-balayage (16) étant configurés pour revenir en position initiale dès l'atteinte de la position finale pendant une période de réinitialisation (P_{réinit}), le procédé comprenant l'analyse des images (IM) acquises pendant la période de réinitialisation (P_{réinit}) pour déterminer un éventuel défaut du détecteur (12) dans la direction de balayage.

7. Procédé selon la revendication 6, dans lequel le dispositif d'acquisition (10) comprend deux modes de réglage distincts : un premier mode de réglage configuré pour acquérir une image nette de la scène et un deuxième mode de réglage configuré pour acquérir une image floue de la scène, le deuxième mode de réglage étant appliqué pendant les périodes de réinitialisation (P_{réinit}).

8. Procédé selon l'une quelconque des revendications 1 à 7, dans lequel le détecteur matriciel (12) est un détecteur sensible dans une bande de longueurs d'onde comprises entre 3 micromètres et 5 micromètres ou dans une bande de longueurs d'onde comprises entre 8 micromètres et 12 micromètres.

9. Dispositif (10) d'acquisition d'images comprenant :
a. un détecteur matriciel (12) ayant une pluralité de pixels,
b. des moyens de balayage (14) de la scène selon une vitesse angulaire de balayage (V_{B}),
c. des moyens de contre-balayage (16) de la scène selon une vitesse angulaire de contre-balayage (V_{CB}), la vitesse angulaire de contre-balayage (V_{CB}) étant différente de la vitesse angulaire de balayage (V_{B}) d'une différence de vitesse angulaire (Δ),
d. des moyens de formation d'image (20), et
e. un contrôleur (22) adapté pour commander les moyens de balayage (14) et les moyens de contre-balayage (16) et configuré pour mettre en oeuvre un procédé d'acquisition d'images selon l'une quelconque des revendications 1 à 8.

10. Système optronique, notamment de veille passive, comprenant un dispositif (10) d'acquisition d'images selon la revendication 9.

## Patentansprüche

1. Verfahren zum Erfassen von Bildern einer Szene durch eine Bilderfassungsvorrichtung (10), die Bilderfassungsvorrichtung (10) umfassend einen Matrixdetektor (12), der eine Vielzahl von Pixeln umfasst, Abtasteinrichtungen (14) der Szene gemäß einer Abtastwinkelgeschwindigkeit (V_{B}) und Gegenabtasteinrichtungen (16) der Szene mit einer Gegenabtastwinkelgeschwindigkeit (V_{CB}), wobei sich die Gegenabtastwinkelgeschwindigkeit (V_{CB}) um eine Winkelgeschwindigkeitsdifferenz (Δ) von der Abtastwinkelgeschwindigkeit (V_{B}) unterscheidet, das Verfahren umfassend die folgenden Schritte:
a. Erfassen aufeinanderfolgender Bilder (IM) von aufeinanderfolgenden, sich teilweise überlappenden Abschnitten der Szene auf unterschiedlichen Pixelsätzen des Detektors (12), wobei jeder Pixelsatz in Bezug auf den Pixelsatz, der das Erfassen des vorherigen Bildes ermöglicht hat, um eine gleiche Anzahl von Pixeln abhängig von der Winkelgeschwindigkeitsdifferenz (Δ) versetzt ist, und
b. Erzeugen eines endgültigen Bilds (IMF) der Szene abhängig von den erfassten Bildern (IM).

2. Verfahren nach Anspruch 1, wobei der Schritt eines Erzeugens Folgendes umfasst:
a. Korrigieren aufeinanderfolgender Bilder (IM) der Szene, sodass die gemeinsamen Abschnitte der Szene auf den Bildern (IM) übereinstimmen,
b. für jeden gleichen Abschnitt der Szene, der nacheinander auf getrennten Pixelsätzen abgebildet ist, Bestimmen eines Zwischenbilds (IMlnt) des Abschnitts der Szene abhängig von den neu berechneten Bildern des Abschnitts der Szene, und
c. Bestimmen des endgültigen Bilds (IMF) der Szene abhängig von den bestimmten Zwischenbildern (IMInt).

3. Verfahren nach Anspruch 2, wobei das Bestimmen von jedem Zwischenbild (IMlnt) das Berechnen eines Mittelwerts der korrigierten Bilder des Abschnitts der Szene umfasst.

4. Verfahren nach einem der Ansprüche 1 bis 3, wobei die Winkelgeschwindigkeitsdifferenz (Δ) vorbestimmt ist, sodass die Anzahl der Pixel, die der Verschiebung zwischen zwei aufeinanderfolgenden Bildern (IM) entspricht, größer als oder gleich wie eins ist.

5. Verfahren nach einem der Ansprüche 1 bis 4, wobei die Pixel des Detektors (12) in dem Erfassungsschritt in Zeilen und Spalten angeordnet sind, wobei die Zeilen Zeilenachsen (X_{L}) und die Spalten Spaltenachsen (X_{C}) definieren, wobei die Verschiebung der Anzahl der Pixel entlang einer Verschiebungsachse (X_{D}) erfolgt, wobei die Verschiebungsachse (X_{D}) mit den Zeilenachsen (X_{L}) und den Spaltenachsen (X_{C}) einen von 0° und 180° verschiedenen Winkel bildet.

6. Verfahren nach einem der Ansprüche 1 bis 5, wobei die Gegenabtasteinrichtungen (16) ein Gegenabtastgesamtfeld aufweisen, das eine Gegenabtastanfangsposition und eine Gegenabtastendposition definiert, wobei die Gegenabtasteinrichtungen (16) konfiguriert sind, um nach Erreichen der Endposition während einer Rücksetzperiode (P_{réinit}) in die Ausgangsposition zurückkehren, das Verfahren umfassend das Analysieren der während der Rücksetzperiode (P_{réinit}) erfassten Bilder (IM), um einen möglichen Fehler des Detektors (12) in der Abtastrichtung zu bestimmen.

7. Verfahren nach Anspruch 6, wobei die Erfassungsvorrichtung (10) zwei verschiedene Einstellmodi umfasst: einen ersten Einstellmodus, der konfiguriert ist, um ein scharfes Bild der Szene zu erfassen, und einen zweiten Einstellmodus, der konfiguriert ist, um ein unscharfes Bild der Szene zu erfassen, wobei der zweite Einstellmodus während der Rücksetzperioden (P_{réinit}) angewendet wird.

8. Verfahren nach einem der Ansprüche 1 bis 7, wobei der Matrixdetektor (12) ein Detektor ist, der in einem Wellenlängenband zwischen 3 Mikrometern und 5 Mikrometern oder in einem Wellenlängenband zwischen 8 Mikrometern und 12 Mikrometern empfindlich ist.

9. Bilderfassungsvorrichtung (10), umfassend:
a. einen Matrixdetektor (12), der eine Vielzahl von Pixeln aufweist,
b. Abtasteinrichtungen (14) der Szene gemäß einer Abtastwinkelgeschwindigkeit (V_{B}),
c. Gegenabtasteinrichtungen (16) der Szene gemäß einer Gegenabtastwinkelgeschwindigkeit (V_{CB}) wobei sich die Gegenabtastwinkelgeschwindigkeit (V_{CB}) um eine Winkelgeschwindigkeitsdifferenz (Δ) von der Abtastwinkelgeschwindigkeit (V_{B}) unterscheidet,
d. Bilderzeugungseinrichtungen (20), und
e. eine Steuereinheit (22), die angepasst ist, um die Abtasteinrichtungen (14) und die Gegenabtasteinrichtungen (16) zu steuern, und die konfiguriert ist, um ein Bilderfassungsverfahren nach einem der Ansprüche 1 bis 8 durchzuführen.

10. Optronisches System, insbesondere zur passiven Überwachung, umfassend eine Bilderfassungsvorrichtung (10) nach Anspruch 9.

## Claims

1. A method of acquiring images of a scene by an image acquisition device (10), the acquisition device (10) comprising a matrix detector (12) having a multitude of pixels, means (14) for scanning the scene at a scan angular velocity (V_{B}) and means (16) for back scanning the scene at a back scan angular velocity (V_{CB}), the back scan angular velocity (V_{CB}) being different from the scan angular velocity (V_{B}) by an angular velocity difference(Δ), the method comprising the following steps:
a. acquisition of successive images (IM) of consecutive portions of the scene partially overlapping on distinct sets of pixels of the detector (12), each set of pixels being offset from the set of pixels having made it possible to acquire the preceding image by the same number of pixels as a function of the difference in angular velocity (Δ), and
b. generation of a final image (IMF) of the scene based on the images (IM) acquired.

2. A method according to claim 1, in which the method comprises:
a. re-aligning successive images (IM) of the scene so as to match common portions of the scene on the said images (IM),
b. for each same portion of the scene imaged successively on distinct sets of pixels, determination of an intermediate image (IMInt) of the said portion of scene as a function of the realigned images of the said portion of scene, and
c. determining the final image (IMF) of the scene as a function of the intermediate images (IMInt) determined.

3. A method according to claim 2, in which the determination of each intermediate image (IMInt) comprises calculating an average of the registered images of said scene portion.

4. A method according to any one of claims 1 to 3, in which the difference in angular velocity (Δ) is predetermined so that the number of pixels corresponding to the offset between the two consecutive images (IM) is greater than or equal to one.

5. A method according to any one of claims 1 to 4, in which the pixels of the detector (12) are arranged in rows and columns, the rows defining row axes (X_{L}) and the columns defining column axes (X_{C}), during the acquisition step, the number of pixels being shifted along an offset axis (X_{D}), the offset axis (X_{D}) forming an angle other than 0° and 180° with the line axes (X_{L}) and the column axes (X_{C}).

6. A method according to any one of claims 1 to 5, wherein the back scan means (16) has a total back scan field defining an initial back scan position and a final back scan position, the back scan means (16) being configured to return to the initial position upon reaching the final position during a reset period (P_{réinit}), the method comprising the analysis of images (IM) acquired during the reset period (P_{réinit}) to determine any fault in the detector (12) in the scanning direction.

7. A method according to claim 6, in which the acquisition device (10) comprises two distinct adjustment modes: a first adjustment mode configured to acquire a sharp image of the scene and a second adjustment mode configured to acquire a blurred image of the scene, the second adjustment mode being applied during the reset periods(P_{réinit}).

8. A method according to any one of claims 1 to 7, wherein the matrix detector (12) is a detector sensitive in a wavelength band of between 3 micrometres and 5 micrometres or in a wavelength band of between 8 micrometres and 12 micrometres.

9. Image acquisition device (10) comprising:
a. a matrix detector (12) having a multitude of pixels,
b. means (14) for scanning the scene at a scanning angular velocity (V_{B}),
c. means (16) for back scanning the scene at a back scanning angular velocity (V_{CB}), the back scanning angular velocity (V_{CB}) being different from the scanning angular velocity (V_{B}) by an angular velocity difference (Δ),
d. imaging means (20), and
e. a controller (22) adapted to control the scanning means (14) and the back scanning means (16) and configured to implement an image acquisition method according to any one of claims 1 to 8.

10. An optronic system, in particular a passive surveillance system, comprising an image acquisition device (10) according to claim 9.
